# EUROPEAN PATENT SPECIFICATION

(11) **EP 2 051 346 B1**
(45) Date of publication and mention of the grant of the patent: **02.09.2009**
(21) Application number: 07075895.8
(22) Date of filing: 15.10.2007
(51) Int. Cl.: H02G 3/14

(54) **Installation material assembly, installation material interface, build-in element and method of assembling an installation material assembly**
Installationsmaterialanordnung, Installationsmaterialschnittstelle, Einbauteil und Verfahren zur Montage einer Installationsmaterialanordnung
Ensemble de matériels d'installation, interface de matériels d'installation, élément encastré et procédé pour assembler un ensemble de matériels d'installation

(43) Date of publication of application: 22.04.2009
(73) Proprietor: B.V. Kunststoffenindustrie Attema, 4203 NJ Gorinchem (NL)
(72) Inventor: de Hoog, Antonie, 4213 DE Dalem (NL)
(74) Representative: Mertens, Hans Victor

(56) References cited:
- DE-C- 348 078
- DE-C- 502 253
- GB-A- 597 333

## Description

The present invention relates to an assembly of electrical installation material, and an electrical installation material interface and build-in element as e.g. used in buildings and housing and a method of assembling an installation material assembly.

An assembly of electrical installation material in general comprises a build-in element like a box or ring-shaped element which is e.g. mounted to or in a wall of the building and an interface comprising e.g. a switch or a socket. In order to rigidly mount the interface to the wall or to the build-in element, several operations need to be performed.

In general, assembling the installation material requires both establishing an electrical connection and a mechanical connection. In a first step, the interface is connected to the electric wiring of the building. In this step, a wiring element of the interface is connected to connecting points of the electric wiring of the building. Conventionally, this is done using a connector wherein the connecting points are rigidly fixed to the wiring element of the interface by means of screws or clamps. It can be noted that providing all the required connections can be a time-consuming activity which, in addition, requires the use of skilled personnel to avoid wrong connections being made. In a next step, the interface is fitted to the build-in element and is assembled together with the build-in element, thereby securing the interface to the wall. Alternatively, the interface may be fitted to the wall directly without being fitted to a build-in element.

Conventionally, there are different ways to assemble the interface to the build-in element thereby securing the interface to the wall. GB 597,333 discloses an installation material assembly according to the preamble of claim 1, and a method of assembly of the corresponding interface to the build-in element.

An important drawback of the conventional ways of assembling the interface to the build-in element is that it requires a substantial amount of work to mount the installation material assembly.

It is therefore an object of the present invention to provide an installation material assembly, an installation material interface, a build-in element and an assembly method which require less work to mount.

In an embodiment, the invention provides an installation material assembly comprising a build-in element and an interface, the interface comprising a connecting element and fastening means for connecting the connecting element to a cover plate of the interface and for securing the cover plate relative to the build-in element, the assembly further comprising members which, in use, secure the connecting element relative to the build-in element, the members being configured to position the connecting element relative to the build-in element such that an outward movement of the connecting element relative to the build-in element is limited or restricted, the members comprising a rim mounted to the build-in element and a rim mounted to the connecting element, characterized in that the member mounted to either the build-in element or the connecting element comprises a plurality of rims.

In an installation material assembly according to the present invention, no separate step of mounting the connecting element to the build-in element by screws or clamps is required. In an assembly according to the present invention, the members are arranged in such a manner that a fixation of the connecting element of the interface to the build-in element is realised at the same time as the mounting of other parts of the interface (such as a cover plate) to the build-in element takes place or is realised by an appropriate positioning of the connecting element relative to the build-in element.

In an embodiment of the present invention, in general, the interface of a installation material assembly comprises multiple parts (e.g. a connecting element, a cover plate) that are assembled by moving them towards each other. This means that during this assembly, some parts of the interface, such as the connecting element, are moved towards (in an axial direction) a cover plate of the interface. This movement of the connecting element towards the cover plate can be used to secure the interface to the build-in element. This is achieved by providing members to the assembly that are arranged to restrict or limit an outward movement of the connecting element relative to the build-in element (in other words, a movement of the connecting element out of the build-in element). As such, when the different parts of the interface are moved towards each other (by the fastening means), the members of the build-in element and the connecting element will restrict or limit an outward movement of the connecting element. As a consequence, the other parts of the interface, e.g. the cover plate, can only be moved further inwards (in other words, towards the connecting element) until they are ultimately fixed to the build-in element or a wall in which the build-in element is embedded.

In the assembly according to the present invention, no separate step is required to connect the connecting element or the cover plate to the build-in element by e.g. screws or clamps, thereby reducing the amount of work required to mount the installation material assembly.

In the present invention, the members are arranged such that the outward movement of the connecting element relative to the build-in element may be limited at different positions of the connecting element and the build-in element relative to each other. This is obtained by an assembly wherein the member mounted to either the build-in element or the connecting element comprises a plurality of rims. In such an arrangement, the person assembling the installation material assembly can easily select the preferred position of the build-in element relative to the connecting element (when moving the connecting element, at least partly, inwardly into the build-in element), this being the position in which the mounting of the cover plate to the build-in element or the wall can be accomplished in as little time as possible.

Other features, advantages and aspects of the present invention will be apparent from the following description in conjunction with the appended drawings showing exemplary, non-limiting embodiments.
Figure 1 schematically depicts an XY-view of an embodiment of an installation material assembly.
Figure 2 schematically depicts an XY-view of the embodiment of Figure 1, partly assembled.
Figure 3 schematically depicts an XY-view of the embodiment of Figure 1, fully assembled.
Figure 4 schematically depicts an XY-view of an embodiment of an installation material assembly according to the present invention.
Figure 5 schematically depicts an XY-view of the embodiment of Figure 4 of an installation material assembly according to the present invention, fully assembled.
Figure 6 schematically depicts an XY- and XZ-view of the embodiment of the installation material assembly of Figure 1.
Figure 7 schematically depicts an XY and an alternative XZ-view of the build-in element of the embodiment of the installation material assembly of Figure 1.
Figure 8 schematically depicts an XY and an XZ-view of the connecting element of the embodiment of the installation material assembly of Figure 1.
Figure 9 schematically depicts an XZ-view of the embodiment of the installation material assembly of Figure 1.
Figure 10 schematically depicts an XZ-view of the embodiment of the installation material assembly of Figure 1, the connecting element inserted in the build-in element.
Figure 11 schematically depicts an XY-view of an embodiment of an installation material assembly according to the present invention.
Figure 12 schematically depicts an XY-view of an embodiment of an installation material assembly.
Figure 13 schematically depicts an installation material interface according to the present invention.
Figure 14 schematically depicts the installation material interface of Figure 13 mounted to a wall.
Figure 15 schematically depicts an alternative material interface mounted to a wall.
Figure 16 schematically depicts a plug and socket arrangement.

In the different Figures, the same or similar components are indicated with the same reference numerals. Further, in the Figures arrows X, Y and Z indicate different orthogonal directions.

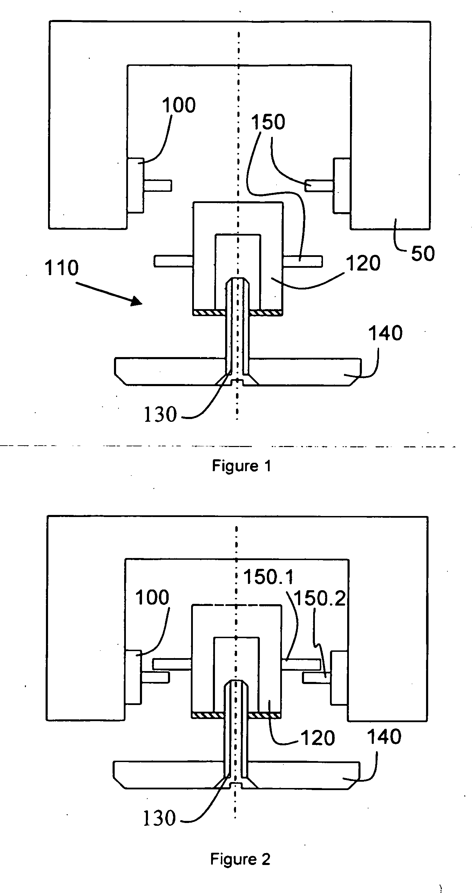

Figure 1 schematically depicts an embodiment of an installation material assembly. Figure 1 shows a build-in element 100 such as a box or ring, or a part thereof, and an interface 110 of the assembly. The build-in element 100 is secured to a wall 50. The interface 110 comprises a connecting element 120 which is connected to a cover plate 140 of the interface by fastening means 130 (e.g. a screw). The assembly further comprises members 150 mounted to both the connecting element 120 and the build-in element 100.

The members 150 are arranged in such manner that the connecting element 120 can be inserted in the build-in element 100 such that a member 150 mounted to the connecting element 120 is positioned further inward than a member mounted to the build-in element 100. This can be achieved in various ways, as is explained below.

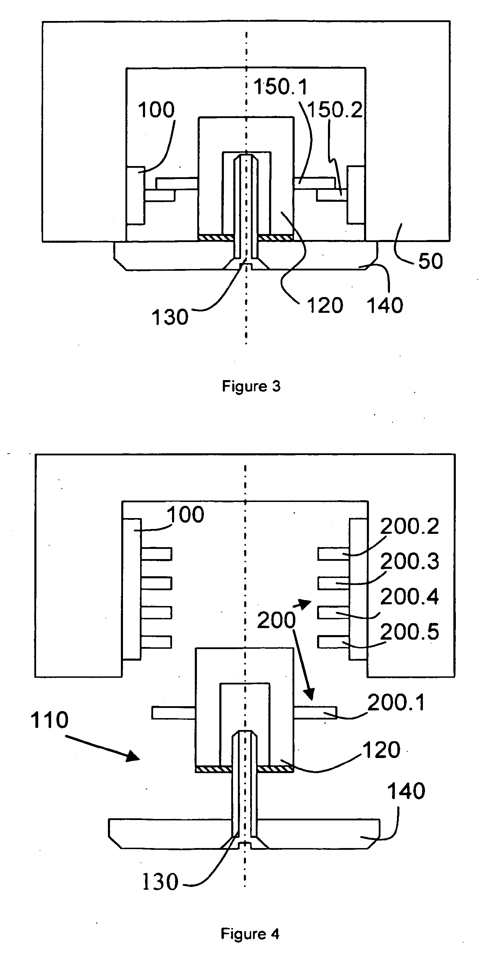

Figure 2 schematically depicts an XY-view of the assembly as shown in Figure 1 when the interface has been inserted in the build-in element. In the situation as depicted, the member 150.1 mounted to the connecting element is positioned further inward than a co-operating member 150.2 mounted to the build-in element 100. In this position, the interface 110 can be secured to the wall or the build-in element by using the fastening means 130 to move the connecting element towards the cover plate 140. As the movement outwardly of the connecting element 120 is limited by the members 150.1 and 150.2, the cover plate 140 will move towards the connecting element until the cover plate 140 is secured to the wall. At the same time, the connecting element 120 will be secured to the build-in element by the cooperation of the members 150.1 and 150.2. Figure 3 schematically depicts this situation for the embodiment as shown in Figure 1. As can be seen, the cover plate 140 is secured to the wall 50 whereas the connecting element 120 is secured to the build-in element via the members 150.1 and 150.2.

In the embodiment as shown in Figures 1-3, the members 150 (or 150.1 and 150.2) can e.g. comprise a rim mounted to the build-in element and a rim mounted to the connecting element. The rim may be resilient.

According to the present invention, the member mounted to either the build-in element or the connecting element comprises a plurality of rims. Such an embodiment is schematically depicted in Figure 4. Compared to the embodiment depicted in Figures 1-3, members 200 as shown in Figure 4 comprise a member 200.1 mounted to the connecting element (e.g. a rim) and a plurality of members (e.g. rims) 200.2 to 200.5 mounted to the build-in element 100. In such an arrangement, the connecting element 110 can be secured to the build-in element at various positions; the person assembling the installation material assembly can select the most appropriate one, i.e. the position in which the mounting of the cover plate to the build-in element or the wall requires the least amount of work.

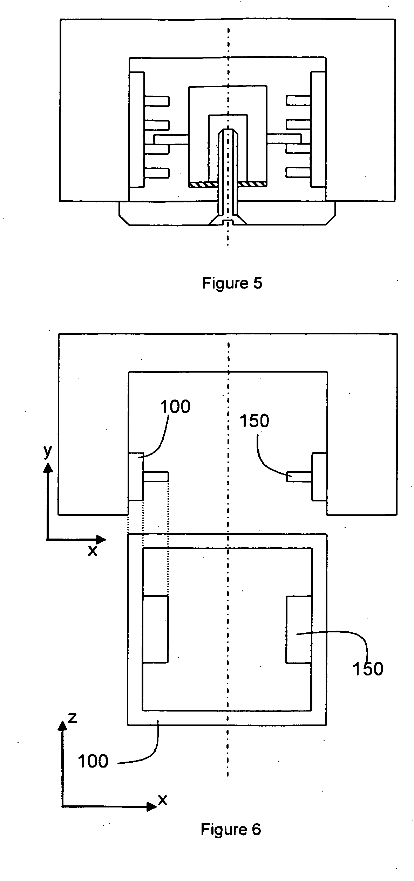

Figure 5 shows the assembled position for the embodiment as shown in Figure 4. For clarity, the reference numerals have been omitted in Figure 5.

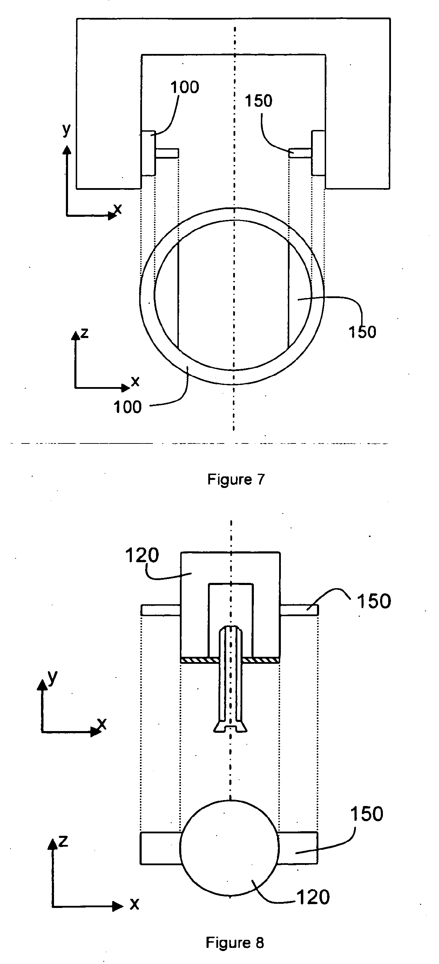

Figures 6-8 schematically depict cross-sectional views of the build-in element and the interface, both in an XY-plane (corresponding to the views as shown in Figures 1-5) and in an XZ-plane. As indicated above, in order to secure the connecting element 120 to the build-in element 100, the connecting element is inserted in the build-in element and positioned such that a member mounted to the connecting element is positioned further inward than a member mounted to the build-in element. It will be clear to the skilled person that such insertion would not be difficult in case of resilient members or rims thereof, and in case the opening provided for inserting the connecting element would e.g. have a circular shape, the diameter of the circle being smaller than the outer dimensions of the member mounted to the connecting element. The insertion can, however, even more easily be made in case the members mounted to the build-in element and connecting element are not provided along the entire circumference of the elements. Figures 6 and 7 show some possible arrangements for the build-in element 100 and the member 150 mounted to the build-in element.

Figure 6 schematically depicts a build-in element 100 having a substantially square cross-section (in the XZ plane). An example of such a build-in element is a build-in box. Mounted to two opposing sides of the build-in element 100 is a member 150 extending along part of the opposing sides.

Figure 7 schematically shows an alternative arrangement wherein the build-in element 150 has a substantially circular cross-section (in the XZ-plane) (e.g. a ring shaped element) and wherein the member 150 comprises two segments.

Figure 8 schematically shows a possible arrangement of the connecting element and member mounted to it, both in the XY-plane and the XZ-plane. As can be seen, the member 150 does not have a circular cross-section but comprises two parts arranged diametrically along the connecting element.

In order to insert the connecting element in to the build-in element, the following steps can be performed:
1) positioning the connecting element relative to the build-in element such that the connecting element is movable inwards into the build-in element substantially without rotating the connecting element.
2) moving the connecting element inward such that the members of the connecting element and the build-in element can, at least partly, pass each other.
3) rotating the connecting element relative to the build-in element such that a subsequent displacement of the connecting element relative to the build-in element in an outward direction is limited by the respective members.

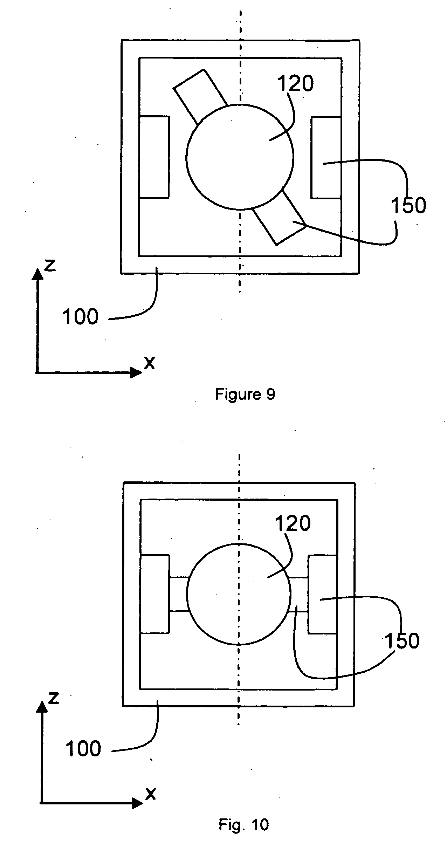

Step 1) is schematically illustrated in Figure 9 which shows an XZ-cross-sectional view of a build-in element 100 and a connecting element 120. As can be seen, in the relative position as shown, the connecting element 120 can be displaced in a direction perpendicular to the XZ-plane, substantially without being obstructed by the member 150 mounted to the build-in element 100.

The relative position of the build-in element 100 and the connecting element 120 after step 3) is performed, is schematically shown in Figure 10 (XZ-view). As can be seen in Figure 10, the member 150 mounted to the connecting element is partly obscured behind the member 150 mounted to the build-in element 100. In this position, it will be clear that the outward movement of the connecting element relative to the build-in element is restricted by the co-operating members 150.

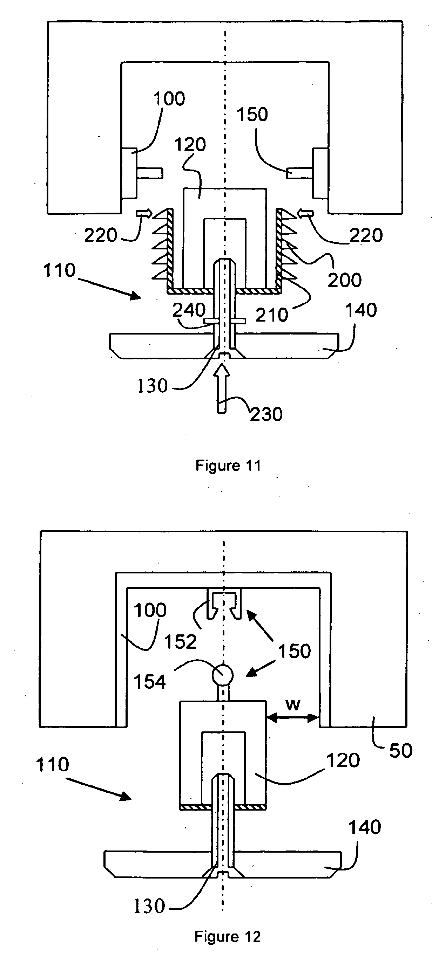

In an embodiment, the members comprise a saw-tooth profile mounted to either the connecting element or the build-in element. Such an embodiment is illustrated in Figure 11.

Figure 11 schematically shows an installation material assembly similar to the arrangement shown in Figure 1, apart from the saw-tooth profile (200) which is mounted to the connection element instead of the member 150.1 as shown in Figure 2. It can be noted that the saw-tooth profile basically has the same function as e.g. the plurality of rims as arranged on the build-in element as shown in Figure 4. The saw-tooth profile enables the connecting element to be positioned at various positions relative to the build-in element. The saw-tooth profile can be mounted directly to the connecting element or, in a preferred embodiment, the saw-tooth profile is mounted to a flexible member 210 enabling the saw-tooth profile to move radially inwardly (as indicated by arrow 220 in Figure 11). In such an arrangement, there is no actual need to position the build-in element relative to the connecting element is such way that the connecting element can be inserted substantially without being obstructed by the member 150 mounted to the build-in element (i.e. the positioning step (1) as described above and illustrated in Figure 9, is not required in such an arrangement).

In case the insertion of the connecting element into the build-in element requires the member mounted to the connecting element to move radially inwards, some resistance can be experienced during the insertion. In case the cover plate is slidably mounted to the fastening means 130, it would not be possible to exert a force on the connecting member using the cover plate. Under such circumstances, one can apply a force to the fastening means 130 (as indicated by the arrow 230) to introduce the connecting member 120 into the build-in element 100. As an alternative, the fastening means130 can be provided with a rim 240 arranged to limit the possible displacement of the cover plate 140 relative to the connecting means 120. As an example of such an arrangement, the fastening means 130 can comprise a screw, the rim 240 can e.g. be a nut screwed on the screw.

When such a rim is present, the insertion of the connecting element can be accomplished by exerting a force on the cover plate, rather than on the connecting means. As, in general, this will increase the available area for exerting a force to, this will facilitate the assembling of the interface and the build-in element.

In an embodiment, the members 150 comprise a snap-on connection as e.g. shown in Figure 12. In the arrangement as shown, one part 152 of the snap-on connection is mounted to a bottom of the build-in element 100, the other part 154 being mounted to the connecting element 120. In such an embodiment, the connecting element 120 can be secured to the build-in element 100 by connecting both parts of the snap-on connection. In the arrangement as shown, this is realised by inserting the part 154 into the part 152 by moving both parts towards each other. In general, this requires that some force is applied to the connecting element 120. Such force can be applied directly to the connecting element or to the fastening means 130 (as indicated in Figure 11 by the arrow 230). When a rim is applied to the fastening means 130 (as. e.g. shown in Figure 11), the force required to make the snap-on connection can advantageously be applied via the cover plate 140, as is explained above. As will be appreciated by the skilled person, the snap-on connection can be designed in such manner that the force required to assemble the snap-on connection is smaller than the force required for disassembling the connection. This can e.g. be obtained by providing either part of the snap-on connection with an asymmetric profile. An example of such a profile is the saw-tooth profile of member 152 of Figure 11. It can further be noted that by applying the snap-on connection on the central axis of the assembly, the entire assembly can be made more compact. In the example as shown, the distance between the build-in element 100 and the connecting member 120, indicated by the arrow w, can be reduced, i.e. a smaller build-in element can be applied. Alternatively, the build-in element could accommodate a more complex and/or larger connecting element.

It can further be stated that in a preferred embodiment, the snap-on connection is circularly symmetrical about a central axis of the assembly, e.g. embodied as a combination of a circular rib, and hook elements hooking behind a longitudinal edge of the rib. This allows rotation of the connecting element about the central axis (as may be required to align the connecting element with the wall to which the assembly is mounted) when the snap-on connection is made.

It can also be noted that, instead of one central snap-on connection, the members can e.g. comprise two snap-on connections positioned on opposite sides of the connecting element, i.e. similar to the position of the members as shown in Figure 6.

In a further embodiment, there is provided an installation material interface for mounting to a wall. The interface of the installation material assemblies as described above can also be applied directly to a wall rather than by means of a build-in element. In such an arrangement, an edge of a hole provided in the wall can be used as a member co-operating with a member of the installation material interface. Such an installation material interface can e.g. be applied to a switch board as e.g. used in a control room controlling an industrial process.

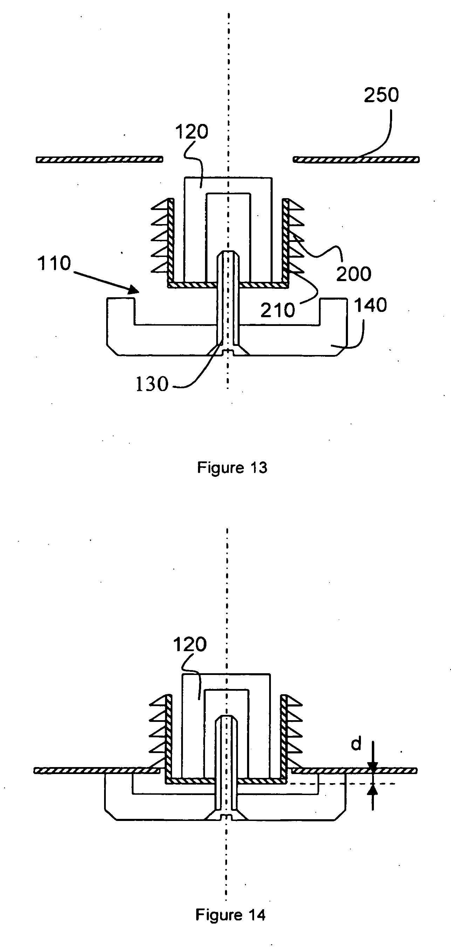

Figure 13 schematically depicts an installation material interface together with a wall 250 on which the interface can be mounted. Figure 13 schematically shows an installation material interface 110 similar to the interface as shown in Figure 11. The interface comprises a connecting element 120 which is provided with a member, i.e. a saw-tooth profile 200, arranged to secure the interface to the wall 250 in a similar manner as the interface of the installation material assemblies as described above to the build-in elements of the installation material assemblies. Note that, as can be seen when comparing Figures 11 and 13, the cover plates 140 shown in both figures have a different shape. This is due to the fact that depending on the thickness of the wall and the mounting of the saw-tooth profile to the connecting element 120, the connecting element 120 may, after assembly (see Figure 14), remain partly located outside the wall, as indicated by the distance d in figure 14.

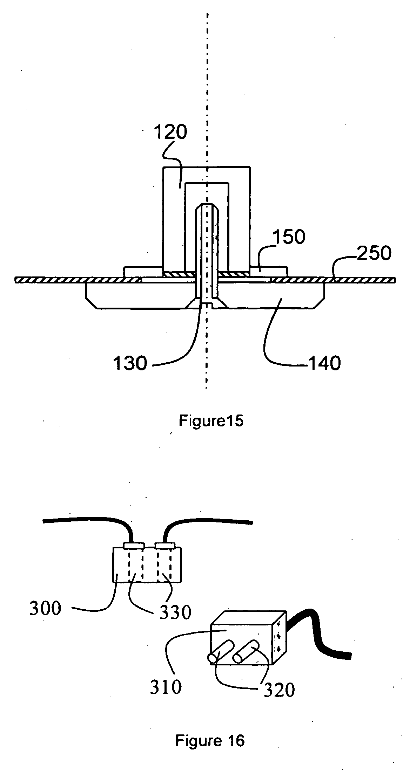

Note that such an amendment to the cover plate is not an absolute requirement, by appropriate positioning of the member 200 to the connecting element, a cover plate as e.g. shown in Figure 11 can be applied. Such an arrangement is e.g. shown in Figure 15, in its assembled position. In the arrangement as shown, the connecting element 120 comprises a member 150 (e.g. a rim) which can be arranged inside the hole of the wall 250 (following e.g. the procedure as described in conjunction with Figures 9 and 10) and which can be secured to the back side of the wall by operating the fastening means 130 of the interface thereby moving the connecting element 120 and the cover plate 140 towards each other.

In an embodiment, the connecting element further comprises one of a plug and socket arranged to, in use, be secured to the other of a plug and a socket connected to the connection point. Rather than using a conventional connector to connect electric wiring to the connecting element, a plug and socket combination is applied. Such a combination is schematically depicted in Figure 16. This figure schematically depicts a socket 300 and a plug 310 which can be applied in combination with either an installation material assembly or installation material interface according to the present invention. Such an arrangement is advantageous because it enables the electric assembly to be done faster compared to using a conventional connector system. It can further be noted that in such an arrangement, the plug or socket need not be connected to the connecting element via a flexible connection but may be integrated with the connecting part. By doing so, the time to realise the electrical connection can be further reduced. In addition, the overall reliability of the connection may further be improved.

Although the plug and socket combination of Figure 16 only shows two connecting pins 320 and corresponding holes 330, it will be clear that a more complicated connecting requiring more that two connections, e.g. including a grounding wire, can be established in a similar manner.

In a preferred embodiment, the plug and socket may be non-symmetric, i.e. the various connecting pins of the plug have a different shape or size or position, the socket being designed accordingly. In such an arrangement, there is only one way to connect the plug and the socket, and as such, no mistakes can be made. As a result, the connection can be done faster and in addition, does not require high technical skills for making the connection.

It can further be noted that the present invention may also be advantageously applied in installation material assemblies, installation material interfaces and build-in elements as e.g. applied in computer networks or the like.

## Claims

1. Installation material assembly comprising a build-in element (100) and an interface (110), the interface comprising a connecting element (120) and fastening means (130) for connecting the connecting element (120) to a cover plate (140) of the interface and for securing the cover plate (140) relative to the build-in element, the assembly further comprising members (150) which, in use, secure the connecting element relative to the build-in element, the members (150) being configured to position the connecting element relative to the build-in element such that an outward movement of the connecting element relative to the build-in element is limited or restricted, the members (150) comprising a rim mounted to the build-in element and a rim mounted to the connecting element, **characterized in that** the member (150) mounted to either the build-in element or the connecting element comprises a plurality of rims.

2. Assembly according to claim 1, wherein the plurality of rims are formed by a plurality of members (200.2, 200.3, 200.4, 200.5).

3. Assembly according to claim 1, wherein the member (150) comprises a saw-tooth profile (200) mounted to the connecting element (120) or the build-in element (100).

4. Assembly according to claim 3, wherein the saw-tooth profile is mounted to the connecting element (120) via a flexible member (210).

5. Assembly according to claim 1, wherein the members (150) enable an inward movement of the connecting element relative to the build-in element, and enable a positioning of the connecting element relative to the build-in element such that an outward movement of the connecting element relative to the build-in element is limited or restricted.

6. Assembly according to claim 1, wherein the members are arranged to enable an inward movement of the connecting element relative to the build-in element and to limit or restrict an outward movement, and the connecting element is securable relative to the build-in element by fastening the fastening means.

7. Assembly according to claim 1, wherein the members (150) comprise a snap-on connection.

8. Assembly according to claim 7, wherein the snap-on connection is arranged on a central axis of the assembly.

9. Assembly according to any of the preceding claims, wherein the fastening means (130) comprises a screw arranged to connect the cover-plate (140) to the connecting element (120).

10. Assembly according to any of the preceding claims, wherein the fastening means (130) are provided with a rim (240) arranged to limit the displacement of the cover-plate (140) towards the connecting element (120).

11. Assembly according to any of the preceding claims, wherein the build-in element comprises a ring-shaped element.

12. Assembly according to any of the preceding claims, wherein the build-in element comprises a build-in box.

13. Assembly according to any of the preceding claims, wherein the connecting element further comprises one of a plug and socket arranged to, in use, be secured to the other of a plug and a socket connected to a connection point of an electric wiring.

14. Assembly according to claim 13, wherein the plug and socket are non-symmetric.

15. Assembly according to claim 13 or 14, wherein the one of a plug and socket is an integral part of the connecting element.

16. Installation material interface (110) for mounting to a build-in element (100) in a wall, the interface comprising a connecting element (120), a cover plate (140) and fastening means (130) for securing the connecting element (120) to the cover plate and for securing the cover plate (140) relative to the build-in element, the connecting element (120) further comprising a member (150) which, in use, secures the connecting element relative to the build-in element, the member (150) being configured to position the connecting element relative to the build-in element such that an outward movement of the connecting element relative to the build-in element is limited or restricted, **characterized in that** the member (150) mounted to the connecting element comprises a plurality of rims adapted to interact with a rim mounted to the build-in element.

17. Installation material interface (110) for mounting to a wall, the interface comprising a connecting element (120), a cover plate (140) and fastening means (130) for securing the connecting element (120) to the cover plate and for securing the cover plate (140) relative to the wall, the connecting element (120) further comprising a member (150) which, in use, secures the connecting element relative to the wall, the member (150) being configured to position the connecting element relative to the wall such that an outward movement of the connecting element relative to the wall is limited or restricted, **characterized in that** the member (150) mounted to the connecting element comprises a plurality of rims adapted to interact with a back side of the wall.

18. Build-in element (100) for mounting an installation material interface (110) to a wall, the interface comprising a connecting element (120), a cover plate (140) and fastening means (130) for securing the connecting element (120) to the cover plate and for securing the cover plate (140) relative to the build-in element, the connecting element (120) further comprising a member (150) which, in use, secures the connecting element relative to the build-in element, the member (150) being configured to position the connecting element relative to the build-in element such that an outward movement of the connecting element relative to the build-in element is limited or restricted, **characterized in that** the member (150) mounted to the build-in element comprises a plurality of rims adapted to interact with a rim mounted to the connecting element.

19. Method of assembling an installation material assembly, comprising:
- moving a connecting element (120) of the assembly, at least partly, inwards into a build-in element of the assembly
- positioning the connecting element of the assembly relative to the build-in element such that an outward movement of the connecting element relative to the build-in element is restricted or limited by members (150) comprising a rim mounted to the build-in element and a rim mounted to the connecting element, and
- securing the connecting element relative to the build-in element by displacing a cover plate of the assembly towards the connecting element by fastening means of the assembly,
**characterized in** providing the member (150) mounted to either the build-in element or the connecting element with a plurality of rims.

20. Method according to claim 19, wherein the step of moving the connecting element inward into the build-in element comprises:
- positioning the connecting element relative to the build-in element such that the connecting element is movable inwards into the build-in element substantially without rotating the connecting element,
- moving the connecting element inward such that the members can, at least partly, pass each other, and
- rotating the connecting element relative to the build-in element such that a subsequent displacement of the connecting element relative to the build-in element in an outward direction is limited by the members.

## Patentansprüche

1. Installationsmaterialanordnung, enthaltend ein Einbauteil (100) und eine Schnittstelle (110), wobei die Schnittstelle ein Verbindungsteil (120) und eine Befestigungseinrichtung (130) zum Verbinden des Verbindungsteils (120) mit einer Abdeckplatte (140) der Schnittstelle und zum Sichern der Abdeckplatte (140) im Bezug auf das Einbauteil enthält, wobei die Anordnung weiterhin Elemente (150) enthält, die bei Verwendung das Verbindungsteil im Bezug auf das Einbauteil sichern, wobei die Elemente (150) derart beschaffen sind, dass sie das Verbindungsteil im Bezug auf das Einbauteil derart sichern, dass eine Auswärtsbewegung des Verbindungsteils im Bezug auf das Einbauteil begrenzt oder beschränkt ist, wobei die Elemente (150) einen Vorsprung, der am Einbauteil angebracht ist, und einen Vorsprung, der am Verbindungsteil angebracht ist, enthalten, **dadurch gekennzeichnet, dass** das Element (150), das entweder am Einbauteil oder am Verbindungsteil angebracht ist, eine Vielzahl von Vorsprüngen enthält.

2. Anordnung nach Anspruch 1, bei der die Vielzahl von Vorsprüngen durch eine Vielzahl von Elementen (200.2, 200.3, 200.4, 200.5) ausgebildet ist.

3. Anordnung nach Anspruch 1, bei der das Element (150) ein Sägezahnprofil (200) enthält, das am Verbindungsteil (120) oder am Einbauteil (100) angebracht ist.

4. Anordnung nach Anspruch 3, bei der das Sägezahnprofil am Verbindungsteil (120) über ein flexibles Element (210) angebracht ist.

5. Anordnung nach Anspruch 1, bei der die Elemente (150) eine Einwärtsbewegung des Verbindungsteils im Bezug auf das Einbauteil ermöglichen und eine Positionierung des Verbindungsteils im Bezug auf das Einbauteil derart ermöglichen, dass eine Auswärtsbewegung des Verbindungsteils im Bezug auf das Einbauteil begrenzt oder beschränkt ist.

6. Anordnung nach Anspruch 1, bei der die Elemente so angeordnet sind, dass sie eine Einwärtsbewegung des Verbindungsteils im Bezug auf das Einbauteil gestatten und eine Auswärtsbewegung begrenzen oder beschränken, und das Verbindungsteil im Bezug auf das Einbauteil durch Festziehen der Befestigungseinrichtung gesichert werden kann.

7. Anordnung nach Anspruch 1, bei der die Elemente (150) eine Einrastverbindung enthalten.

8. Anordnung nach Anspruch 7, bei der die Einrastverbindung auf einer zentralen Achse der Anordnung angebracht ist.

9. Anordnung nach einem der vorhergehenden Ansprüche, bei der die Befestigungseinrichtung (130) eine Schraube enthält, die so beschaffen ist, dass sie die Abdeckplatte (140) mit dem Verbindungsteil (120) verbindet.

10. Anordnung nach einem der vorhergehenden Ansprüche, bei der die Befestigungseinrichtung (130) mit einem Vorsprung (240) versehen ist, der so angeordnet ist, dass er die Verschiebung der Abdeckplatte (140) zum Verbindungsteil (120) begrenzt.

11. Anordnung nach einem der vorhergehenden Ansprüche, bei der das Einbauteil ein ringförmiges Teil enthält.

12. Anordnung nach einem der vorhergehenden Ansprüche, bei der das Einbauteil einen Einbaukasten enthält.

13. Anordnung nach einem der vorhergehenden Ansprüche, bei der das Verbindungsteil weiterhin einen Stecker oder eine Buchse enthält, die so beschaffen sind, dass sie bei Verwendung mit einer Buchse bzw. einem Stecker verbunden werden können, die/der an einen Verbindungspunkt einer elektrischen Verdrahtung angeschlossen ist.

14. Anordnung nach Anspruch 13, bei der Stecker und Buchse nicht symmetrisch sind.

15. Anordnung nach Anspruch 13 oder 14, bei der der Stecker oder die Buchse integraler Bestandteil des Verbindungsteils ist.

16. Installationsmaterialschnittstelle (110) für die Anbringung an einem Einbauteil (100) in einer Wand, wobei die Schnittstelle ein Verbindungsteil (120), eine Abdeckplatte (140) und eine Befestigungseinrichtung (130) zum Sichern des Verbindungsteils (120) an der Abdeckplatte und zum Sichern der Abdeckplatte (140) im Bezug auf das Einbauteil enthält, wobei das Verbindungsteil (120) weiterhin ein Element (150) enthält, das in Verwendung das Verbindungsteil im Bezug auf das Einbauteil sichert, wobei das Element (150) derart beschaffen ist, dass es das Verbindungsteil im Bezug auf das Einbauteil derart positioniert, dass eine Auswärtsbewegung des Verbindungsteils im Bezug auf das Einbauteil begrenzt oder beschränkt ist, **dadurch gekennzeichnet, dass** das Element (150), das am Verbindungsteil angebracht ist, eine Vielzahl von Vorsprüngen enthält, die dazu eingerichtet sind, mit einem Vorsprung zu interagieren, der am Einbauteil angebracht ist.

17. Installationsmaterialschnittstelle (110) für die Anbringung an einer Wand, wobei die Schnittstelle ein Verbindungsteil (120), eine Abdeckplatte (140) und eine Befestigungseinrichtung (130) zum Sichern des Verbindungsteils (120) an der Abdeckplatte und zum Sichern der Abdeckplatte (140) im Bezug auf die Wand enthält, wobei das Verbindungsteil (120) weiterhin ein Element (150) enthält, das in Verwendung das Verbindungsteil im Bezug auf die Wand sichert, wobei das Element (150) derart beschaffen ist, dass es das Verbindungsteil im Bezug auf die Wand derart positioniert, dass eine Auswärtsbewegung des Verbindungsteils im Bezug auf die Wand begrenzt oder beschränkt ist, **dadurch gekennzeichnet, dass** das Element (150), das am Verbindungsteil angebracht ist, eine Vielzahl von Vorsprüngen enthält, die dazu eingerichtet sind, mit einer Rückseite einer Wand zu interagieren.

18. Einbauteil (100) für die Anbringung einer Installationsmaterialschnittstelle (110) an einer Wand, wobei die Schnittstelle ein Verbindungsteil (120), eine Abdeckplatte (140) und eine Befestigungseinrichtung (130) zum Sichern des Verbindungsteils (120) an der Abdeckplatte und zum Sichern der Abdeckplatte (140) im Bezug auf das Einbauteil enthält, wobei das Verbindungsteil (120) weiterhin ein Element (150) enthält, das in Verwendung das Verbindungsteil im Bezug auf das Einbauteil sichert, wobei das Element (150) derart beschaffen ist, dass es das Verbindungsteil im Bezug auf das Einbauteil derart positioniert, dass eine Auswärtsbewegung des Verbindungsteils im Bezug auf das Einbauteil begrenzt oder beschränkt ist, **dadurch gekennzeichnet, dass** das Element (150), das am Einbauteil angebracht ist, eine Vielzahl von Vorsprüngen enthält, die dazu eingerichtet sind, mit einem Vorsprung zu interagieren, der am Verbindungsteil angebracht ist.

19. Verfahren zum Zusammensetzen einer Installationsmaterialanordnung, umfassend:
- Bewegen eines Verbindungsteils (120) der Anordnung wenigstens teilweise nach innen in ein Einbauteil der Anordnung,
- Positionieren des Verbindungsteils der Anordnung im Bezug auf das Einbauteil derart, dass eine Auswärtsbewegung des Verbindungsteils im Bezug auf das Einbauteil durch Elemente (150) begrenzt oder beschränkt wird, die einen Vorsprung, der am Einbauteil angebracht ist, und einen Vorsprung, der am Verbindungsteil angebracht ist, enthalten, und
- Sichern des Verbindungsteils im Bezug auf das Einbauteil durch Verschieben einer Abdeckplatte der Anordnung zum Verbindungsteil durch Festziehen der Befestigungseinrichtung der Anordnung,
**gekennzeichnet durch** Versehen des Elementes (150), das entweder am Einbauteil oder am Verbindungsteil angebracht ist, mit einer Vielzahl von Vorsprüngen.

20. Verfahren nach Anspruch 19, bei dem der Schritt des Bewegens des Verbindungsteils nach innen in das Einbauteil umfasst:
- Positionieren des Verbindungsteils im Bezug auf das Einbauteil derart, dass das Verbindungsteil nach innen in das Einbauteil bewegt werden kann, ohne im wesentlichen das Verbindungsteil zu drehen,
- Bewegen des Verbindungsteils nach innen derart, dass die Elemente wenigstens teilweise einander passieren können, und
- Drehen des Verbindungsteils im Bezug auf das Einbauteil derart, dass eine anschließende Verschiebung des Verbindungsteils im Bezug auf das Einbauteil in einer Auswärtsrichtung durch die Elemente begrenzt wird.

## Revendications

1. Ensemble de matériels d'installation comprenant un élément encastré (100) et une interface (110), l'interface comprenant un élément de liaison (120) et des moyens de fixation (130) pour relier l'élément de liaison (120) à une plaque de recouvrement (140) de l'interface et pour fixer la plaque de recouvrement (140) par rapport à l'élément encastré, l'ensemble comprenant en outre des organes (150) qui, en utilisation, fixent l'élément de liaison par rapport à l'élément encastré, les organes (150) étant configurés pour positionner l'élément de liaison par rapport à l'élément encastré de sorte qu'un mouvement vers l'extérieur de l'élément de liaison par rapport à l'élément encastré soit limité ou restreint, les organes (150) comprenant un bord monté sur l'élément encastré et un bord monté sur l'élément de liaison, **caractérisé en ce que** l'organe (150) monté soit sur l'élément encastré, soit sur l'élément de liaison comprend une pluralité de bords.

2. Ensemble selon la revendication 1, dans lequel la pluralité de bords sont formés par une pluralité d'organes (200.2, 200.3, 200.4, 200.5).

3. Ensemble selon la revendication 1, dans lequel l'organe (150) comprend un profilé en dents de scie (200) monté sur l'élément de liaison (120) ou sur l'élément encastré (100).

4. Ensemble selon la revendication 3, dans lequel le profilé en dents de scie est monté sur l'élément de liaison (120) par l'intermédiaire d'un organe flexible (210).

5. Ensemble selon la revendication 1, dans lequel les organes (150) permettent un mouvement vers l'intérieur de l'élément de liaison par rapport à l'élément encastré, et permettent un positionnement de l'élément de liaison par rapport à l'élément encastré de sorte qu'un mouvement vers l'extérieur de l'élément de liaison par rapport à l'élément encastré soit limité ou restreint.

6. Ensemble selon la revendication 1, dans lequel les organes sont agencés pour permettre un mouvement vers l'intérieur de l'élément de liaison par rapport à l'élément encastré et pour limiter ou restreindre un mouvement vers l'extérieur, et l'élément de liaison peut être fixé par rapport à l'élément encastré en fixant les moyens de fixation.

7. Ensemble selon la revendication 1, dans lequel les organes (150) comprennent une liaison par encliquetage.

8. Ensemble selon la revendication 7, dans lequel la liaison par encliquetage est agencée sur un axe central de l'ensemble.

9. Ensemble selon l'une quelconque des revendications précédentes, dans lequel les moyens de fixation (130) comprennent une vis agencée pour relier la plaque de recouvrement (140) à l'élément de liaison (120).

10. Ensemble selon l'une quelconque des revendications précédentes, dans lequel les moyens de fixation (130) sont pourvus d'un bord (240) agencé pour limiter le déplacement de la plaque de recouvrement (140) vers l'élément de liaison (120).

11. Ensemble selon l'une quelconque des revendications précédentes, dans lequel l'élément encastré comprend un élément annulaire.

12. Ensemble selon l'une quelconque des revendications précédentes, dans lequel l'élément encastré comprend un boîtier encastré.

13. Ensemble selon l'une quelconque des revendications précédentes, dans lequel l'élément de liaison comprend en outre l'une d'une fiche et d'une prise agencée pour, en utilisation, être fixée à l'autre d'une fiche et d'une prise connectée à un point de connexion d'un câblage électrique.

14. Ensemble selon la revendication 13, dans lequel la fiche et la prise ne sont pas symétriques.

15. Ensemble selon la revendication 13 ou 14, dans lequel ladite une d'une fiche et d'une prise fait partie intégrante de l'élément de liaison.

16. Interface de matériels d'installation (110) destinée à être montée sur un élément encastré (100) dans un mur, l'interface comprenant un élément de liaison (120), une plaque de recouvrement (140) et des moyens de fixation (130) pour fixer l'élément de liaison (120) à la plaque de recouvrement et pour fixer la plaque de recouvrement (140) par rapport à l'élément encastré, l'élément de liaison (120) comprenant en outre un organe (150) qui, en utilisation, fixe l'élément de liaison par rapport à l'élément encastré, l'organe (150) étant configuré pour positionner l'élément de liaison par rapport à l'élément encastré de sorte qu'un mouvement vers l'extérieur de l'élément de liaison par rapport à l'élément encastré soit limité ou restreint, **caractérisée en ce que** l'organe (150) monté sur l'élément de liaison comprend une pluralité de bords adaptés pour interagir avec un bord monté sur l'élément encastré.

17. Interface de matériels d'installation (110) destinée à être montée sur un mur, l'interface comprenant un élément de liaison (120), une plaque de recouvrement (140) et des moyens de fixation (130) pour fixer l'élément de liaison (120) à la plaque de recouvrement et pour fixer la plaque de recouvrement (140) par rapport au mur, l'élément de liaison (120) comprenant en outre un organe (150) qui, en utilisation, fixe l'élément de liaison par rapport au mur, l'organe (150) étant configuré pour positionner l'élément de liaison par rapport au mur de sorte qu'un mouvement vers l'extérieur de l'élément de liaison par rapport au mur soit limité ou restreint, **caractérisée en ce que** l'organe (150) monté sur l'élément de liaison comprend une pluralité de bords adaptés pour interagir avec un côté arrière du mur.

18. Elément encastré (100) pour le montage d'une interface de matériels d'installation (110) sur un mur, l'interface comprenant un élément de liaison (120), une plaque de recouvrement (140) et des moyens de fixation (130) pour fixer l'élément de liaison (120) à la plaque de recouvrement et pour fixer la plaque de recouvrement (140) par rapport à l'élément encastré, l'élément de liaison (120) comprenant en outre un organe (150) qui, en utilisation, fixe l'élément de liaison par rapport à l'élément encastré, l'organe (150) étant configuré pour positionner l'élément de liaison par rapport à l'élément encastré de sorte qu'un mouvement vers l'extérieur de l'élément de liaison par rapport à l'élément encastré soit limité ou restreint, **caractérisé en ce que** l'organe (150) monté sur l'élément encastré comprend une pluralité de bords adaptés pour interagir avec un bord monté sur l'élément de liaison.

19. Procédé d'assemblage d'un ensemble de matériels d'installation, comprenant les étapes consistant à :
- déplacer un élément de liaison (120) de l'ensemble, au moins partiellement, vers l'intérieur dans un élément encastré de l'ensemble,
- positionner l'élément de liaison de l'ensemble par rapport à l'élément encastré de sorte qu'un mouvement vers l'extérieur de l'élément de liaison par rapport à l'élément encastré soit restreint ou limité par des organes (150) comprenant un bord monté sur l'élément encastré et un bord monté sur l'élément de liaison, et
- fixer l'élément de liaison par rapport à l'élément encastré en déplaçant une plaque de recouvrement de l'ensemble vers l'élément de liaison par des moyens de fixation de l'ensemble,
**caractérisé en ce que** l'organe (150) monté soit sur l'élément encastré, soit sur l'élément de liaison est pourvu d'une pluralité de bords.

20. Procédé selon la revendication 19, dans lequel l'étape de déplacement de l'élément de liaison vers l'intérieur dans l'élément encastré comprend :
- le positionnement de l'élément de liaison par rapport à l'élément encastré de sorte que l'élément de liaison puisse être déplacé vers l'intérieur dans l'élément encastré sensiblement sans tourner l'élément de liaison,
- le déplacement de l'élément de liaison vers l'intérieur de sorte que les organes puissent, au moins partiellement, se dépasser, et
- la rotation de l'élément de liaison par rapport à l'élément encastré de sorte qu'un déplacement subséquent de l'élément de liaison par rapport à l'élément encastré dans une direction vers l'extérieur soit limité par les organes.
